# EUROPEAN PATENT APPLICATION

(11) **EP 3 054 450 A1**
(43) Date of publication of application: **10.08.2016**
(21) Application number: 16151403.9
(22) Date of filing: 15.01.2016
(51) Int. Cl.: G11B 27/034, G11B 27/32, G11B 27/34, G11B 27/28, H04N 21/472

(54) **METHOD AND SYSTEM FOR PRODUCING STORYLINE FEED FOR SPORTING EVENT**

(30) Priority: 05.02.2015 US 201514614923
(71) Applicant: Illuminated Rocks Oy, 02170 Espoo (FI)
(72) Inventor: Suoknuuti, Marko, 02580 Siuntio (FI); Arponen, Jarmo, 02760 Espoo (FI); Hyytiäinen, Lauri, 01670 Vantaa (FI)
(74) Representative: Suominen, Kaisa Liisa

(57) **Abstract**

A system and a method are disclosed, for producing a storyline feed for a sporting event. The system and method comprises forming a first indication at a first location, the first indication is based on a combination of timing information and location information of at least one athlete at the first location. The first indication is compared with predefined information to predict a second indication at a second location. The predefined information comprises information about a performance of at least one athlete and information about the sporting event. The storyline feed is formed of the first indications and the predicted second indications.

## Description

### TECHNICAL FIELD

The present disclosure generally relates to a video watching experience of a sporting event, and, more specifically, to a method and a system for producing a storyline feed for a sporting event.

### BACKGROUND

In the general field of broadcasting of a sporting event, such as skiing or racing competition, multiple cameras are used. The multiple cameras may be associated with different viewing positions and various stages of the sporting event, such as a starting point, a finishing point or any particular point in-between. Typically, every sporting event (like skiing or racing matches) includes interesting or climax part, for example final moments before the finishing point, the split times and the like. Typically, such interesting parts of a sporting event are preferred to be watched by the viewers. Moreover, apart from such interesting parts, other aspects of a sporting event are also associated with viewers' preferences, such as a liking for a particular athlete or player, team, nation and the like. Therefore, mostly based on such preferences a viewer wishes to watch the sporting events.

In addition to above, now a days viewers use a second screen application while watching such sporting events to have a more interactive feel. The second screen application includes use of a computing device, such as a tablet or a smartphone, for viewing additional or supplementary information associated with a video of a sporting event played on another device, such as a television. However, such second screen applications are costly and inefficient. For example, such second screen applications are tailored manually and provide a highly tailored viewing experience. Further, each of such second screen applications are generally associated with a single type of sporting event, for which a viewer need to use multiple applications to be able to follow different sporting events. Moreover, when a sporting event is broadcasted using multiple video streams, it becomes challenging for a viewer to navigate through the multiple video streams. Additionally, capabilities of such second screen applications to react to instant and unexpected changes are very limited; however the instant and unexpected changes are common characteristics of a sporting event.

Therefore, in light of the foregoing discussion, there exists a need to overcome the aforementioned drawbacks associated with a watching experience of a viewer.

### SUMMARY

The present disclosure seeks to provide a method for producing a storyline feed for a sporting event.

The present disclosure further seeks to provide a method for rendering a user interface, on a user terminal, about a storyline feed for a sporting event.

The present disclosure also seeks to provide a system for producing a storyline feed for a sporting event.

In one aspect, an embodiment of the present disclosure provides a method for producing a storyline feed for a sporting event, in which method a combination of timing information and location information of at least one athlete forms an indication, the method comprising steps of:
a) forming a first indication at a first location;
b) comparing the first indication with predefined information to predict a second indication at a second location, which predefined information comprises information about a performance of at least one athlete and information about the sporting event; and repeating the steps a) and b) to form a storyline feed comprising the first indications and the predicted second indications.

In another aspect, an embodiment of the present disclosure provides a method for rendering a user interface on a user terminal, wherein the user terminal receives a storyline feed comprising indications, the method comprising steps of:
a) filtering indications based on at least one user preference to form a filtered feed of indications; and
b) rendering the filtered feed of indications on the user terminal.

In yet another aspect, an embodiment of the present disclosure provides a system for producing a storyline feed for a sporting event, comprising a result system and a production server, wherein
a) the production server is configured to receive and store results information from the result system to form a first indication at a first location; and
b) the production server is configured to compare the first indication with predefined information to predict a second indication at a second location, which predefined information comprises information about a performance of at least one athlete and information about the sporting event.

Embodiments of the present disclosure substantially eliminate or at least partially address the aforementioned problems in the prior art, and provides a system and a method for producing a storyline feed for a video of a sporting event.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of an exemplary environment in which embodiments of the present disclosure can be practiced;
FIG. 2 is a schematic illustration of an exemplary setup for creating indications of a storyline feed for a sporting event, in accordance with an embodiment of the present disclosure;
FIG. 3 is a schematic illustration of a user terminal rendered with a user interface associated with a storyline feed for a sporting event; in accordance with an embodiment of the present disclosure;
FIG. 4 is an illustration of steps of a method for producing a storyline feed for a sporting event, in accordance with an embodiment of the present disclosure; and
FIG. 5 is an illustration of steps of a method for rendering a user interface on a user terminal, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a method for producing a storyline feed for a sporting event, in which method a combination of timing information and location information of at least one athlete forms an indication, the method comprising steps of:
a) forming a first indication at a first location;
b) comparing the first indication with predefined information to predict a second indication at a second location, which predefined information comprises information about a performance of at least one athlete and information about the sporting event; and repeating the steps a) and b) to form a storyline feed comprising the first indications and the predicted second indications.

In another aspect, an embodiment of the present disclosure provides a method for rendering a user interface on a user terminal, wherein the user terminal receives a storyline feed comprising indications, the method comprising steps of:
a) filtering indications based on at least one user preference to form a filtered feed of indications; and
b) rendering the filtered feed of indications on the user terminal.

In yet another aspect, an embodiment of the present disclosure provides a system for producing a storyline feed for a sporting event, comprising a result system and a production server, wherein
a) the production server is configured to receive and store results information from the result system to form a first indication at a first location; and
b) the production server is configured to compare the first indication with predefined information to predict a second indication at a second location, which predefined information comprises information about a performance of at least one athlete and information about the sporting event.

In an embodiment, the system of the present disclosure provides a storyline feed for a sporting event based on a user preference. The storyline feed includes a plurality of indication (based on the user preference) including interactive information related to the sporting event. Further, the storyline feed of the sporting event is associated with a live video of the sporting event.

In an embodiment, the production server is configured to send the storyline feed to a user terminal. The production server is communicatively coupled to the user terminal through a communication network. Examples of the communication network includes but are not limited to a Local Area Network (LAN), a Wide Area Network (WAN), a Wi-Fi and the like.

In an embodiment, the user terminal includes a computing device which incudes but not limited to a tablet computer, a phablet, a smartphone and a laptop.

The term "storyline feed" used herein means a digital description of a sporting event with actual and tentative possible scenarios to build emotions or drama for the users or viewers watching the sporting event video, which video may be distributed in multiple ways, such as linear broadcasting or Internet streaming. Specifically, the storyline includes information related to actual and tentative performance of an athlete, i.e. actual and tentative timing and/or location information of the athlete, during the sporting event. The storyline feed also acts as source to various kind of information associated with the sporting event. For example, storyline feed may include information such as result of an athlete, standing of athletes, an estimation of the final results, a heads up of the estimated action, an information card of athlete, records or merits of the athlete, an availability of slow motion clip or a performance compared to estimation.

As mentioned above, the system includes the result system and the production server; however the system also includes an audio-visual production system configured to send audio-visual feed information to the production server. The production server, the result system and audio-visual production system are operatively or communicably coupled to each other using a wired and/or a wireless communication network. For example, the communication network includes but is not limited to a Local Area Network (LAN), a Wide Area Network (WAN), a Wi-Fi and the like.

In an embodiment, the result system manages timing or result related information of the athletes. Specifically, the result system manages information such as split times, scoreboard, participating athletes, start order, name-number mapping, event related clock, event related location and the like. In operation, the result system is configured to provide information to the production server as notifications (based on the timing or result related information mentioned herein).

The notifications are generated when athletes meet or pass particular positions or locations, such as locations of a track or golf course or area of execution of a field sport. In an embodiment, the notification comprises various information such as an athlete's identification (to be mapped with athlete's name, nationality, and the like), a tentative timing (to be mapped various locations of the track), an athlete time (associated with a time that an athlete has spent or raced so far) and an actual time (associated with a standard time of a day when the notification was made).

In an embodiment, the audio-visual production system creates and distributes live audio-visual content to remote viewers (e.g., people watching the event from TV or hand-held device). The audio-visual production system comprises multiple cameras with known positions, multiple microphones, production equipment's like tools for selecting, editing and controlling audio-visual content, tools for adding overlay graphics on the audio-visual content and a control room equipment's for a director and production managers.

In operation, the audio-visual production system is configured to provide information to the production server. For example, the audio-visual production system provides information about camera-stream mapping, camera positions, sub-event type (e.g. in Olympic Games there is a multitude of sporting events happening at the same time), information about the stream that is broadcasted (broadcast-stream mapping), and the like.

In one embodiment, the production server includes information about a sporting event. Specifically, the production server includes a rule database and an event database containing the information about the sporting event. The rule database includes (or defines) rules related to one or more sporting events. Further, the event database includes or defines the event related details, for example venue information, a track profile of biathlon sport and the like.

It is to be understood that the rule database includes information based on a type of the sporting event. For example, if the sporting event relates to a skiing competition the rule database may include information such as women skiing, cross-country skiing, sequential start in 30 sec intervals, 15 kilometer distance, and the like. Similarly, the rule database can include information related to various other sporting events.

In an embodiment, the sporting event may include but not limited to biathlon, triathlon, cross-country skiing, nordic combined, marathon, cross-country running, orienteering, golf, a track and field sports, and motor sports. Specially, the sporting event is associated with a sport which includes a track and athletes, participating in the game and attains different positions (or locations) with respect to different time (or stages of the game). In another embodiment, the sporting event may include a track and field sport, where different area of execution are used for different sports such as high jump etc. In case the sporting event is indeed a track and field sport, the first location where the first indication is formed is simply any location different from the second location, which second location is the area of execution.

In one embodiment, the production server is also configured to fetch/receive the information about the sporting event from a multitude of information sources apart from the result system and the audio-visual production system. For example, the system also includes a historical information system and an external information sources.

In an embodiment, the historical information system manages data of the previously arranged or conducted competitions, for example information about the venues and the performance of the athletes in past. The historical information system can include database for storing such information related to the previously arranged competitions. In an example, the historical information system includes information related to the historical performance, such as split time, race completion time and the like, of an athlete. In operation, the historical information system is configured to update such information and provide information to the production server.

In an embodiment, the external information sources include information about the strengths and weaknesses of an athlete. Specifically, the strengths and weaknesses of an athlete may be derived from athlete's personal databases (having athlete personal information, records, merits, history, or rules), other information services (such as news, blogs, feeds or social media), insiders' information (i.e. coaches, commentators, or knowledge of experts of the sport in the question, tactics or strategies) or sponsors' information. Further, the information about the strengths and weaknesses of an athlete may be updated based on such information. Such an update may occur during the cause of the event, based on live results and actions.

In another embodiment, the external information sources also include information (not related to the athlete), such as information regarding weather, wind and the like. Further, in operation, the external information sources are configured to provide such information to the production server.

As mentioned above, the system of the present disclosure can produce a storyline feed for a sporting event; specifically the production server of the system is operable to create a storyline feed for a live video (for example TV content) of a sporting event. For example, the production server is operable to provide interactive information for the live video and also adapted to provide complementing event/content related information for the live video.

In operation, the production server uses or retrieves relevant information (for a sporting event) from the result system, the audio-visual production system, the historical information system and the external information sources for forming the storyline feed for the sporting event. Specifically, the production server processes all the available relevant information to form the storyline feed for the sporting event.

In an embodiment, the storyline feed is formed with a plurality of indications. Further, each indication is formed by combining timing information and location information of at least one athlete with respect to at least one location. Further, each indication comprises at least one link to content and the respective relative time (as referenced from the beginning of the measurement of time, i.e. the time of the action. Said link to content is typically selected from the group consisting of a link to video feed, a link to audio feed and combinations thereof. The respective relative time is either the relative time of the video feed or the relative time of the audio feed. In case both a video and an audio feed is used, their relative times are typically the same. Each indication may yet further comprise one or more of information about at least one athlete and information about weather. Specifically, the indications are associated with interactive information of the sporting event.

In an embodiment, the production server is configured to receive and store results information from the result system to form indications (such as first indications and predicted second indications). For example, the production server is configured to receive and store results information from the result system to form a first indication at a first location. Thereafter, the production server is configured to compare the first indication with predefined information to predict a second indication at a second location.

In one embodiment, the predefined information includes information about a performance of at least one athlete and information about the sporting event.

In an embodiment, the information about the performance of at least one athlete includes at least one of historical performance and strengths and weaknesses. As mentioned above, the information about the performance of at least one athlete (i.e. the historical performance and strengths and weaknesses) is contained or defined in the historical information system and the external information sources. Therefore, the production server can retrieve or fetch such information from the historical information system and the external information sources for such processing information (i.e. to compare a first indication with predefined information to predict a second indication).

Further, in an embodiment, the information about the sporting event includes information about a venue and information about a sport. As mentioned above, the information about the sporting event (i.e. the information about the venue and sport) is contained or defined in the rule database and the event database. Therefore, the production server can use such information contained or defined in the rule database and the event database for processing such information (i.e. to compare a first indication with predefined information to predict a second indication).

According to an embodiment, the historical performance comprises at least one of split time, penalties, and performance information related to previous sporting events. A penalty is an element influencing the result, such as shooting penalty in biathlon, handicap in golf, a time penalty in sailing.

In an example, if an athlete X is participating in a skiing competition and the athlete X have reached a starting point (i.e. a first point or location of the track) a first indication is created for the athlete X with respect to the starting point. Thereafter, the first indication is compared with the predefined information to predict a second indication at a second location. In an example, the second location may be associated with split times of the skiing competition, i.e. if the skiing competition includes two split times then each time the athlete X meets the two split times the subsequent second indications are created for the athlete X for those two split times. Further, based on the predefined information (for example the strengths and weaknesses of the athlete X) the second indications are predicted. Similarly, for other athlete, such as athletes Y and Z, the first indication and predicted second indications are crated. Therefore, based on the first indications and the predicted second indications a stream of indications for the skiing competition (involving athletes X, Y, Z) is formed.

It may be evident to those skilled in the art that other predefined information (such as the historical performance, the information venue and the information sport) may be taken as comparing parameter to predict the second indications.

In an embodiment, the stream of indications (the first and predicted second indications) is further filtered based on the user preference. For example, the user preference includes at least one of information about the sports type, information about the name of the athlete, information about the team the athlete belongs to and information about the nationality of the athlete.

In one embodiment, the filtering of the indications can happen at the user terminal; however it's necessary for the user terminal to know the user preferences. Alternatively, the filtering of the indications can happen at the production server.

Based on the above example, if the user preference includes liking for the athlete X, then filtered indications would include indications associated with the athlete X only. Otherwise, if the user preference includes liking for athlete Y and Z both, then filtered indications would include indications associated with the athletes Y and Z both (and not X). Alternatively, if the user preference includes liking for specific portion of the competition irrespective of the players, for example moments related to the final split time and finishing point, then filtered indications would include indications associated with the athletes X, Y, Z with respect to their final split time and finishing point. The user preferences may be changed dynamically, for example during a live event, which change affects the stream of indications.

The filtered feed of indications accordingly defines a storyline feed for the sporting event based on the user preference. Specifically, based on the filtered feed of indications a user interface is rendered on the user terminal. The user interface is a graphical user interface having at least one of informative element (for example the athlete X split time at 4.8 km is 5 minutes), actionable element (for example the athlete X is arriving soon at finish, stream available in link A) and media stream element (for example links to broadcasting steams of the sporting event). Specifically, the informative, the actionable and the media stream elements are associated with the indications and accordingly provides a link to video feed, a link to audio feed, information about a relative time of the video feed, information about a relative time of the audio feed, information about at least one athlete and information about weather.

It is to be understood that the filtered feed of indications defining the storyline feed are tentative and formed prior to the occurrence of the sporting event. Therefore, it may be evident to those skilled in the art that while presenting such indications the predicted indications is also updated with the information, for example information from the result system, such as the timing data from split timing positions. Therefore, while watching a video of a sporting event in the user terminal the storyline feed provides a unique real-time interactive viewing experience to the user.

It may be evident to those skilled in the art that, there is various information of the sporting event that goes into a storyline feed of a sporting event. In one example, the sporting event is related to a live 10 km cross country skiing race event. Further, in this race each athlete skies two times 5 km track. The athletes starting interval is 30 sec. There are three split time points at 2 km, 5 km and 7 km. The results at split time points describe how the race develops e.g., who has been the fastest at 2 km point. The result system accordingly of race event captures time at five time points for every athlete (at start, 2 km, 5 km, 7 km and finish). Those times are further retrieved by the production server for forming a part of the storyline related to the cross country skiing race event.

In another example, a multi-feed streaming production, each time taking points in cross country skiing (i.e., start, 2 km, 5 km, 7 km and finish) have their own feed production teams selecting and editing own audio-visual stream from the point. In this case, the audio-visual production of the race comprises these five independent time taking feeds and two other feeds (i.e., audience feed and warm up feed). Transitions in the produced feeds are points that are further retrieved by the production server, and instantly becomes part of the storyline feed having multiple sub-storylines e.g., one per each feed.

In yet another example, the production server process athletes' results from different split points and notifies changes in the standings of different split time points (e.g., new leader at 2 km, an athlete has improved between 2 km and 5 km from position 12 to position 8), calculates new estimation of the race results when new split time result arrives, and calculates an estimation time when an athlete should arrive to her next split time point. These calculated notifications create race analyzing results and heads-ups that become part of the storyline feed.

In still another example, when the production server notifies that there is a silent period in the race (i.e., no transactions nor predictions for occurrences soon), then the software product of the user terminal adds complementing information from the external systems (e.g., records of the current leader, sponsor of the leader, or ad of the sponsor) in the storyline feed.

In one embodiment, the user may view the sporting event over another device, such a smart TV. For example, the user terminal may be operatively coupled to the smart TV. The user terminal may be operatively coupled to smart TV by a wireless connection such as Bluetooth, Wifi and the like.

In an example, the smart TV includes a software product and the user terminal also includes a software product adapted to interact with the software product of the smart TV. The software product of the user terminal commands the software product of the smart TV to perform automatic channel switching. For example, the user may receive the actionable element which is rendered on the user terminal as a graphical UI button, which when activated switches the content shown on the smart TV into what is described in the actionable element. It may be evident to those skilled in the art that the user terminal can be regarded as a second screen and the smart TV can be regarded as a first screen.

The present disclosure accordingly provides a system and a method for producing a storyline feed for a sporting event. The storyline feed of the present disclosure is based on a viewer preference and accordingly enables in providing a unique real-time interactive viewing experience. Further, the storyline feed is very sensitive towards instant and unexpected changes of the sporting event. For example, the storyline feed is associated with real time information, such as timings, scoreboards and the like, which are integrated properly based on the viewer preference to provide the real-time interactive viewing experience. Further, the storyline feed enables in easily navigate among the multiple video streams associated with a sporting events. Finally, the storyline feeds enables a viewer to follow or watch all possible interesting parts of one or more sporting events associated with the user preferences.

### DETAILED DESCRIPTION OF THE DRAWINGS

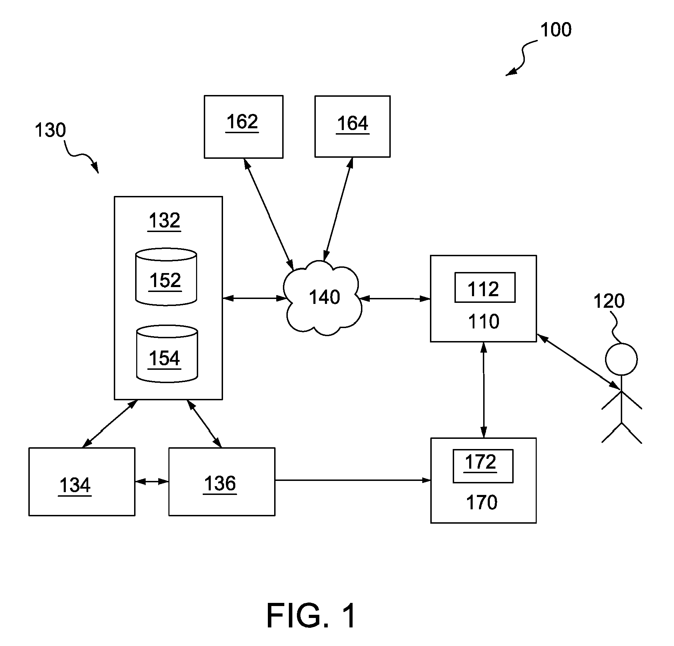

Referring now to the drawings, particularly by their reference numbers FIG. 1 is a schematic illustration of an exemplary environment **100** for practicing an embodiment of the present disclosure. The environment **100** includes a user terminal **110** associated with a user or a viewer **120**. The user terminal **110** includes a software product **112** executable thereon for receiving a storyline feed of a sporting event. The environment **100** also includes a system **130** for producing the storyline feed of the sporting event. The user terminal **110** is communicably coupled to the system **130** by a communication network **140** for receiving the storyline feed.

The system **130** includes a production server **132**, a result system **134** and an audio-visual production system **136** operatively coupled to each other. The production server **130** includes databases, such as a rule database **152** and an event database **154**, having information about the sporting event. The system **130** also includes a historical information system **162** and external information sources **164** communicably coupled to the production server **132** by the communication network **140**.

The production server **132** is operable to receive and process various kinds of information associated with the sporting event for producing a storyline feed for the sporting event. Specifically, the production server **132** is adapted to receive information from the result system **134**, the audio-visual production system **136**, the historical information system **162** and the external information sources **164**, and thereafter process the received information for producing a storyline feed for a sporting event. For example, the production server **132** is configured to receive and store results information from the result system **134** to form a first indication at a first location. The first indication is formed based on a combination of timing information and location information of at least one athlete with respect to the first location.

Thereafter, the production server **132** is configured to compare the first indication with predefined information to predict a second indication at a second location. The predefined information includes information about a performance of at least one athlete and information about the sporting event, which is present in the historical information system **162**, the external information sources **164** and in the databases **152**, **154**. The production server **132** accordingly forms a stream of indications including the first and predicted second indications.

As mentioned above, the software product **112** is executable on the user terminal **110** for receiving the storyline feed; specifically the production server **132** provides a user interface on the user terminal **110**. The user interface includes a filtered feed of indications based on at least one user preference (such as liking for a sport, an athlete and the like). Specifically, the stream of indications (i.e. the first and predicted second indications) are filtered based on the at least one user preference to form the filtered feed of indications. The filtration of the indications can happen either in the production server **132** or in the user terminal **110** based on at least one user preference.

The filtered feed of indications, defines a storyline feed for a sporting event, which is primarily associated with a live video of the sporting event and can be watched on the user terminal **110**. Therefore, the filtered feed of indications provides the user a unique real-time interactive viewing experience while watching the sporting event on the user terminal **110**.

The environment **100** also includes another device **170,** such as a smart TV communicably coupled to the user terminal **110,** for watching the live video of the sporting event. The device **170** includes a software product **172** adapted to interact with the software product **112** of the user terminal **110** for rendering the storyline feed on the device **170**. Further, the software product **112** commands the software product **172** to automatically switch content based on the storyline feed on the user terminal **110**. Specifically, the filtered feed of indications rendered on the user terminal **110** acts as graphical user elements, which when activated, switches the content shown on the device **170** with respect to the filtered feed of indications.

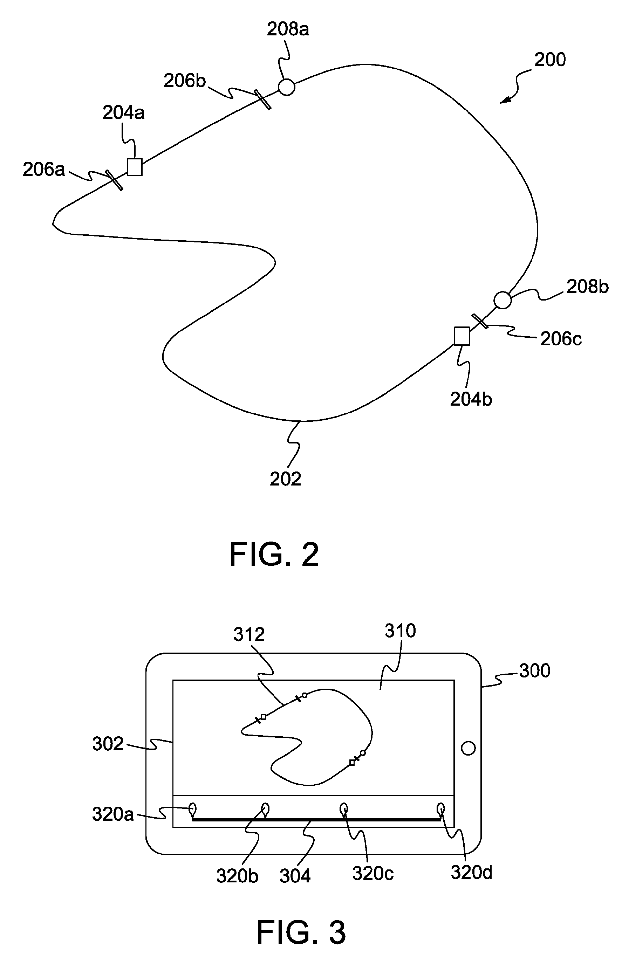

Referring now to FIG. 2, shown is a schematic illustration of an exemplary setup **200** for creating indications of a storyline feed, in accordance to an embodiment of the present disclosure. It is to be understood that, the exemplary setup **200** is related to the environment **100**, particularly, to the system **130** thereof for producing indications of the storyline feed.

The exemplary setup **200** is associated with a sporting event, such as a cross-country skiing of 15 kilometers. The setup **200** includes a track **202,** a pair of cameras **204a, 204b** and a plurality of positions **206a, 206b, 206c of** the track 202, and a pair of athletes **208a, 208b** participating in the sporting event. The positions **206a, 206b, 206c** are those locations on the track **202** with respect to which athlete's performance is calculated. For example, the position **206a** is a starting point as well as finishing points, and the positions **206b, 206c** are any points in between track **202**. Therefore, each time when the athletes **208a, 208b** meets or crosses the positions **206a, 206b, 206c** an indication is produced.

The indication is primarily a combination of timing information and location information of the athletes **208a, 208b** with respect to the positions **206a, 206b, 206c**. For example, as shown in FIG. 2, the athlete **208a** has crossed the position **206b,** therefore this may result in a first indication associated with the athletes **208a** with respect to the position **206b,** ideally a first indication would be associated with the athlete **208a** when (started the race) met the starting position **206a**. Further, a second indication for the athletes **208a** with respect to the position **206c** can be predicated by comparing the first indication with predefined information (i.e. information about a performance of the athletes **208a** and/or information about the sporting event).

The predefined information includes the performance of the athlete **208a** (for example historical performance and strengths and weaknesses) which can be received from the historical information system **162** or external information sources **164.** Further, the predefined information also includes information about the sporting event which can be received from the rule database **152** and the event database **154.** Therefore, in the exemplary setup **200** whenever the athletes **208a, 208b** meets or passes the positions **206a, 206b, 206c** a plurality of indications are produced. Further, each of the plurality of indications is either a first indication or a predictable second indication. The indications are used for producing a storyline feed of the sporting event (for example such as a cross-country skiing of 15 km) based on a user preference.

Referring now to FIG. 3, shown is a schematic view of user terminal **300** with a user interface **302** having a storyline feed **304**, in accordance with an embodiment of the present disclosure. The storyline feed **304** is associated a live video stream **310** of a sporting event **312** (for example skiing). As shown, the storyline feed **304** includes a plurality of indications **320a, 320b, 320c** and **320d** (hereinafter collectively referred to as indications **320**). It is to be understood that the indications **320** presented on the user interface **302** are filtered feed of indications based on the user preference (such as liking for a sport, an athlete and the like).

Further, each of the indications **320** is one of an informative element (i.e. providing athlete's real performance information), an actionable element (i.e. providing athlete's tentative performance information) and a media stream element (i.e. providing available media streams of the sporting event). Therefore, the storyline feed **304** provides the user a personalized interactive viewing experience while viewing the sporting event **312** on the user terminal **300**.

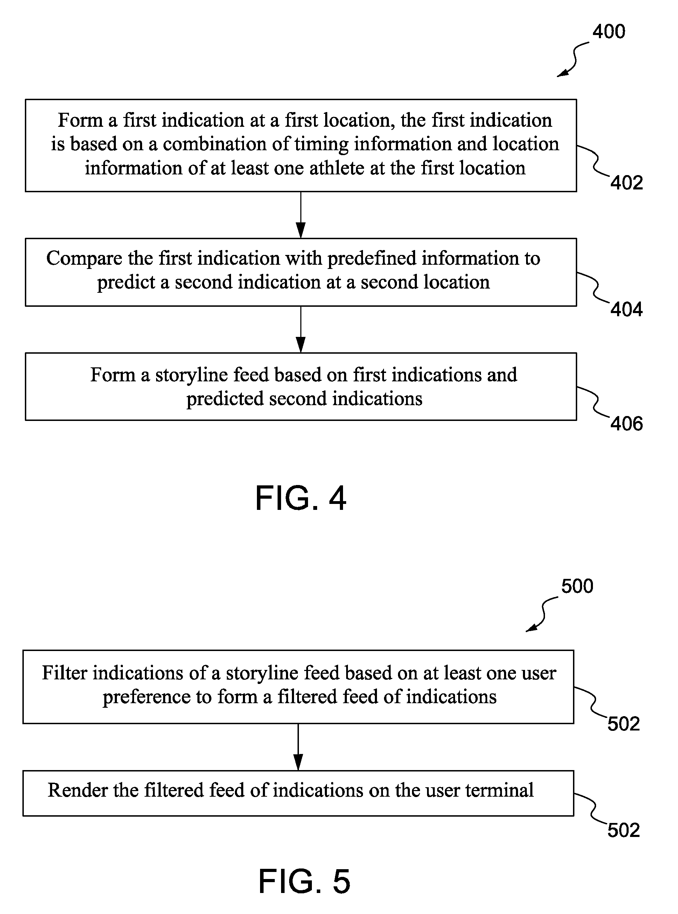

Referring now to FIG. 4, illustrated are steps of a method **400** for producing a storyline feed for a sporting event, in accordance with an embodiment of the present disclosure. Specifically, the method **400** illustrates the steps for producing the storyline feed for the sporting event based on the exemplary environment **100,** explained in conjunction with the FIGS. 1-3.

At step **402,** a first indication is formed at a first location. The first indication is based on a combination of timing information and location information of at least one athlete at the first location.

At step **404,** the first indication is compared with predefined information to predict a second indication at a second location. The predefined information includes information about a performance of at least one athlete and information about the sporting event.

At step **406,** form a storyline feed including first indications and predicted second indications. The first and the predicted second indications are formed by repeating steps of **402** and **404**.

The steps **402** to **406** are only illustrative and other alternatives can also be provided where one or more steps are added, one or more steps are removed, or one or more steps are provided in a different sequence without departing from the scope of the claims herein. For example, the method **400** further includes filtering the indications of the storyline feed based on a user preference. Also, the **400** includes selection of content related to the sporting event based on the indications.

Referring now to FIG. 5, illustrated are steps of a method **500** for rendering a user interface on a user terminal, in accordance with an embodiment of the present disclosure. Specifically, the method **500** illustrates steps for rendering a user interface associated with a storyline feed of a sporting event on a user terminal, based on the exemplary environment **100** explained in conjunction with the FIGS. 1-3.

At step **502,** indications of the storyline feed are filtered based on at least one user preference to form a filtered feed of indications.

At step **504,** the filtered feed of indications is rendered on the user terminal.

The steps **502** to **504** are only illustrative and other alternatives can also be provided where one or more steps are added, one or more steps are removed, or one or more steps are provided in a different sequence without departing from the scope of the claims herein. For example, the method **500** further comprises streaming at least one of video or audio feeds based on the filtered feed of indications on the user terminal.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method for producing a storyline feed for a sporting event, in which method a combination of timing information and location information of at least one athlete forms an indication, the method comprising steps of:
a) forming a first indication at a first location;
b) comparing the first indication with predefined information to predict a second indication at a second location, which predefined information comprises information about a performance of at least one athlete and information about the sporting event; and repeating the steps a) and b) to form a storyline feed comprising the first indications and the predicted second indications.

2. A method according to claim 1, wherein the information about the sporting event comprises information about a venue and information about a sport.

3. A method according to claim 1 or 2, wherein the indications further comprise at least
- a link to video feed; or
- a link to audio feed; or
- a combination of a link to video feed and a link to audio feed, and
- information about a relative time of the video feed; or
- information about a relative time of the audio feed.

4. A method according to any of the preceding claims, wherein the indications further comprise at least
- information about at least one athlete; or
- information about weather.

5. A method according to any of the preceding claims, wherein information about the performance of at least one athlete comprises at least one of
- historical performance; and
- strengths and weaknesses.

6. A method according to claim 5, wherein the historical performance comprises at least one of
- split time;
- penalties; and
- performance information related to previous sporting events.

7. A method according to any of the preceding claims, wherein the sporting event is selected from the group consisting of
- biathlon;
- triathlon;
- cross-country skiing;
- nordic combined;
- marathon;
- cross-country running;
- orienteering;
- golf;
- track and field sports: and
- motor sports.

8. A method for rendering a user interface on a user terminal, wherein the user terminal receives a storyline feed comprising indications, the method comprising steps of:
a) filtering indications based on at least one user preference to form a filtered feed of indications; and
b) rendering the filtered feed of indications on the user terminal.

9. A method according to claim 8, wherein the at least one user preference comprises at least one of
- information about the sports type;
- information about the name of the athlete;
- information about the team the athlete belongs to; and
- information about the nationality of the athlete.

10. A method according to claim 8 or 9, wherein the user interface is a graphical user interface comprising at least one of
- informative element;
- actionable element; and
- media stream element.

11. A method according to any of the claims 8-10, wherein the user terminal is selected from the group consisting of a tablet computer, a phablet, a smartphone, and a laptop.

12. A system for producing a storyline feed for a sporting event, comprising a result system and a production server, wherein
a) the production server is configured to receive and store results information from the result system to form a first indication at a first location; and
b) the production server is configured to compare the first indication with predefined information to predict a second indication at a second location, which predefined information comprises information about a performance of at least one athlete and information about the sporting event.

13. A system according to claim 12, wherein the system further comprises an audio-visual production system configured to send audio-visual feed information to the production server.

14. A system according to claim 12 or 13, wherein the production server is configured to send the storyline feed to a user terminal.
